# EUROPEAN PATENT SPECIFICATION

(11) **EP 2 932 070 B1**
(45) Date of publication and mention of the grant of the patent: **08.05.2019**
(21) Application number: 13874386.9
(22) Date of filing: 16.12.2013
(51) Int. Cl.: F02C 7/24, F02C 7/12, F23R 3/00, F23R 3/06

(54) **GAS TURBINE ENGINE COMBUSTOR HEAT SHIELD WITH INCREASED FILM COOLING EFFECTIVENESS**
GASTURBINENBRENNKAMMER-HITZESCHILD MIT ERHÖHTER FILMKÜHLWIRKSAMKEIT
BOUCLIER THERMIQUE DE CHAMBRE DE COMBUSTION DE MOTEUR À TURBINE À GAZ AVEC EFFICACITÉ DE REFROIDISSEMENT PELLICULAIRE ACCRUE

(30) Priority: 17.12.2012 US 201213716774
(43) Date of publication of application: 21.10.2015
(73) Proprietor: United Technologies Corporation, Farmington, CT 06032 (US)
(72) Inventor: ERBAS-SEN, Nurhak, Manchester, Connecticut 06040 (US); HOKE, James B., Tolland, Connecticut 06084 (US); CUNHA, Frank J., Avon, Connecticut 06001 (US)
(74) Representative: Dehns
(86) International application number: PCT/US2013/075388
(87) International publication number: WO 2014/123624

(56) References cited:
- US-A- 4 242 871
- US-A- 4 628 694
- US-A- 4 655 044
- US-A1- 2010 011 775
- US-A1- 2010 077 764
- US-A1- 2010 095 678
- US-A1- 2010 122 537
- US-A1- 2010 293 957
- US-A1- 2012 240 584
- US-B1- 6 170 266

## Description

### BACKGROUND

The present disclosure relates to a gas turbine engine and, more particularly, to a combustor section therefor.

Gas turbine engines, such as those that power modern commercial and military aircraft, generally include a compressor section to pressurize an airflow, a combustor section for burning a hydrocarbon fuel in the presence of the pressurized air, and a turbine section to extract energy from the resultant combustion gases. US 2010/0122537 A1 discloses combustors with inserts between dual wall liners.

Combustors are subject to high thermal loads for prolonged time periods. Historically, combustors have implemented various cooling arrangements to cool the combustor liner assemblies. Among these is a double liner assembly approach where heat shields directly adjacent to the combustion gases are cooled via impingement on the backside and film cooling on the gas side to maintain temperatures within material limits.

Although effective, the thermal load in a combustor may be non-uniform in some locations such that the combustor may experience differential thermal growth, stress, strain and wear that may negatively effect service life.

### SUMMARY

The invention provides a heat shield for use in a combustor of a gas turbine engine as claimed in claim 1.

In further embodiment of the foregoing embodiment, the heat shield further comprising a plurality of studs which extend from the cold side.

In the alternative or additionally thereto, in the foregoing embodiment the raised feature is forward of the dilution hole.

In the alternative or additionally thereto, in the foregoing embodiment the raised feature is a ramp.

In the alternative or additionally thereto, in the foregoing embodiment the ramp includes a film cooling hole therethrough.

In the alternative or additionally thereto, in the foregoing embodiment the said raised feature is aft of the dilution hole.

In the alternative or additionally thereto, in the foregoing embodiment the raised feature is a ramp.

In the alternative or additionally thereto, in the foregoing embodiment the ramp includes a film cooling hole therethrough.

In the alternative or additionally thereto, in the foregoing embodiment the raised feature is a ramp.

In the alternative or additionally thereto, in the foregoing embodiment the ramp includes a film cooling hole therethrough.

In the alternative or additionally thereto, in the foregoing embodiment the raised feature is rectilinear.

In the alternative or additionally thereto, in the foregoing embodiment the raised feature includes a film cooling hole therethrough.

In the alternative or additionally thereto, in the foregoing embodiment the raised feature is arcuate.

In the alternative or additionally thereto, in the foregoing embodiment the raised feature includes a film cooling hole therethrough.

The invention provides a method of increasing heat transfer through a heat shield of a combustor of a gas turbine engine, as claimed in claim 11.

In a further embodiment of the foregoing embodiment, the method further comprising locating a raised feature proximate the dilution hole.

In the alternative or additionally thereto, in the foregoing embodiment the method further comprising directing film airflow through the raised feature toward the dilution hole.

### BRIEF DESCRIPTION OF THE DRAWINGS

Various features will become apparent to those skilled in the art from the following detailed description of the disclosed non-limiting embodiment. The drawings that accompany the detailed description can be briefly described as follows:
Figure 1 is a schematic cross-section of a gas turbine engine;
Figure 2 is an expanded longitudinal schematic sectional view of a combustor section according to one non-limiting embodiment that may be used with the gas turbine engine shown in Figure 1;
Figure 3 is an expanded longitudinal schematic partial perspective view of a combustor section according to one non-limiting embodiment that may be used with the gas turbine engine shown in Figure 1;
Figure 4 is an expanded perspective view of a heat shield array from a cold side;
Figure 5 is an exploded view of a liner assembly of the combustor;
Figure 6 is an expanded circumferentially partial perspective view of the combustor section;
Figure 7 is an expanded plan view of a heat shield with raised features according to one non-limiting embodiment;
Figure 8 is an expanded plan view of a heat shield with raised features according to another non-limiting embodiment;
Figure 9 is an expanded plan view of a heat shield with raised features according to another non-limiting embodiment;
Figure 10 is an expanded plan view of a heat shield with raised features according to another non-limiting embodiment;
Figure 11 is an expanded plan view of a heat shield with raised features according to another non-limiting embodiment;
Figure 12 is an expanded sectional view of a heat shield with raised features according to another non-limiting embodiment;
Figure 13 is an expanded sectional view of a heat shield with raised features according to another non-limiting embodiment;
Figure 14 is a schematic thermograph of a heat shield with raised features; and
Figure 15 is a schematic thermograph of a RELATED ART heat shield without raised features.

### DETAILED DESCRIPTION

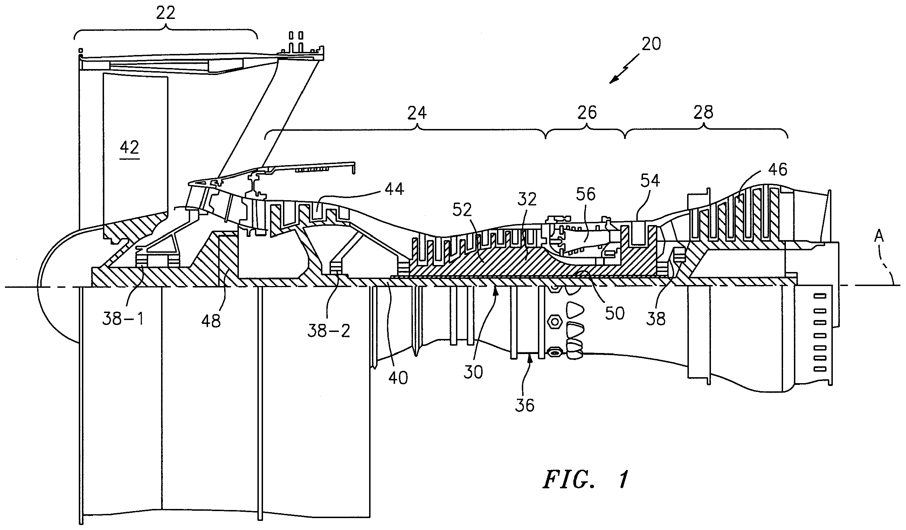

Figure 1 schematically illustrates a gas turbine engine 20. The gas turbine engine 20 is disclosed herein as a two-spool turbo fan that generally incorporates a fan section 22, a compressor section 24, a combustor section 26 and a turbine section 28. Alternative engines might include an augmentor section (not shown) among other systems or features. The fan section 22 drives air along a bypass flowpath while the compressor section 24 drives air along a core flowpath for compression and communication into the combustor section 26 then expansion through the turbine section 28. Although depicted as a turbofan in the disclosed non-limiting embodiment, it should be understood that the concepts described herein are not limited to use with turbofans as the teachings may be applied to other types of turbine engines such as a turbojets, turboshafts, and three-spool (plus fan) turbofans wherein an intermediate spool includes an intermediate pressure compressor ("IPC") between a Low Pressure Compressor ("LPC") and a High Pressure Compressor ("HPC"), and an intermediate pressure turbine ("IPT") between the high pressure turbine ("HPT") and the Low pressure Turbine ("LPT").

The engine 20 generally includes a low spool 30 and a high spool 32 mounted for rotation about an engine central longitudinal axis A relative to an engine static structure 36 via several bearing structures 38. The low spool 30 generally includes an inner shaft 40 that interconnects a fan 42, a low pressure compressor 44 ("LPC") and a low pressure turbine 46 ("LPT"). The inner shaft 40 drives the fan 42 directly or through a geared architecture 48 to drive the fan 42 at a lower speed than the low spool 30. An exemplary reduction transmission is an epicyclic transmission, namely a planetary or star gear system.

The high spool 32 includes an outer shaft 50 that interconnects a high pressure compressor 52 ("HPC") and high pressure turbine 54 ("HPT"). A combustor 56 is arranged between the high pressure compressor 52 and the high pressure turbine 54. The inner shaft 40 and the outer shaft 50 are concentric and rotate about the engine central longitudinal axis A which is collinear with their longitudinal axes.

Core airflow is compressed by the LPC 44 then the HPC 52, mixed with the fuel and burned in the combustor 56, then expanded over the HPT 54 and the LPT 46. The turbines 54, 46 rotationally drive the respective low spool 30 and high spool 32 in response to the expansion. The main engine shafts 40, 50 are supported at a plurality of points by bearing structures 38 within the static structure 36. It should be understood that various bearing structures 38 at various locations may alternatively or additionally be provided.

In one non-limiting example, the gas turbine engine 20 is a high-bypass geared aircraft engine. In a further example, the gas turbine engine 20 bypass ratio is greater than about six (6:1). The geared architecture 48 can include an epicyclic gear train, such as a planetary gear system or other gear system. The example epicyclic gear train has a gear reduction ratio of greater than about 2.3, and in another example is greater than about 2.5:1. The geared turbofan enables operation of the low spool 30 at higher speeds which can increase the operational efficiency of the low pressure compressor 44 and low pressure turbine 46 and render increased pressure in a fewer number of stages.

A pressure ratio associated with the low pressure turbine 46 is pressure measured prior to the inlet of the low pressure turbine 46 as related to the pressure at the outlet of the low pressure turbine 46 prior to an exhaust nozzle of the gas turbine engine 20. In one non-limiting embodiment, the bypass ratio of the gas turbine engine 20 is greater than about ten (10:1), the fan diameter is significantly larger than that of the low pressure compressor 44, and the low pressure turbine 46 has a pressure ratio that is greater than about five (5:1). It should be understood, however, that the above parameters are only exemplary of one embodiment of a geared architecture engine and that the present disclosure is applicable to other gas turbine engines including direct drive turbofans.

In one embodiment, a significant amount of thrust is provided by the bypass flow path due to the high bypass ratio. The fan section 22 of the gas turbine engine 20 is designed for a particular flight condition - typically cruise at about 0.8 Mach and about 35,000 feet. This flight condition, with the gas turbine engine 20 at its best fuel consumption, is also known as bucket cruise Thrust Specific Fuel Consumption (TSFC). TSFC is an industry standard parameter of fuel consumption per unit of thrust.

Fan Pressure Ratio is the pressure ratio across a blade of the fan section 22 without the use of a Fan Exit Guide Vane system. The low Fan Pressure Ratio according to one non-limiting embodiment of the example gas turbine engine 20 is less than 1.45. Low Corrected Fan Tip Speed is the actual fan tip speed divided by an industry standard temperature correction of ("T" / 518.7)^{0.5} in which "T" represents the ambient temperature in degrees Rankine. The Low Corrected Fan Tip Speed according to one non-limiting embodiment of the example gas turbine engine 20 is less than about 1150 fps (351 m/s).

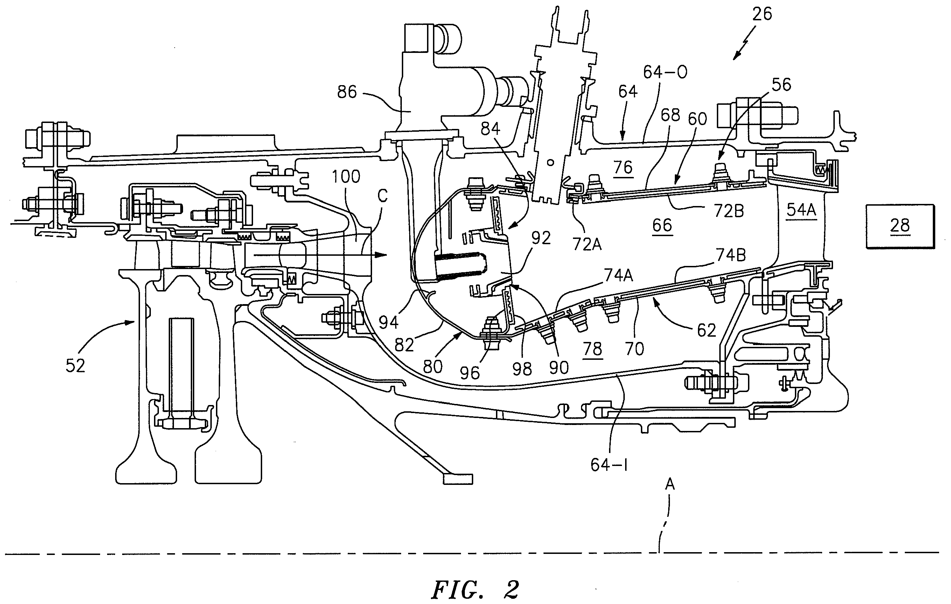

With reference to Figure 2, the combustor 56 generally includes an outer combustor liner assembly 60, an inner combustor liner assembly 62 and a diffuser case module 64. The outer combustor liner assembly 60 and the inner combustor liner assembly 62 are spaced apart such that a combustion chamber 66 is defined therebetween. The combustion chamber 66 is generally annular in shape.

The outer combustor liner assembly 60 is spaced radially inward from an outer diffuser case 64-O of the diffuser case module 64 to define an outer annular plenum 76. The inner combustor liner assembly 62 is spaced radially outward from an inner diffuser case 64-I of the diffuser case module 64 to define an inner annular plenum 78. It should be understood that although a particular combustor is illustrated, other combustor types with various combustor liner arrangements will also benefit herefrom. It should be further understood that the disclosed cooling flow paths are but an illustrated embodiment and should not be limited only thereto.

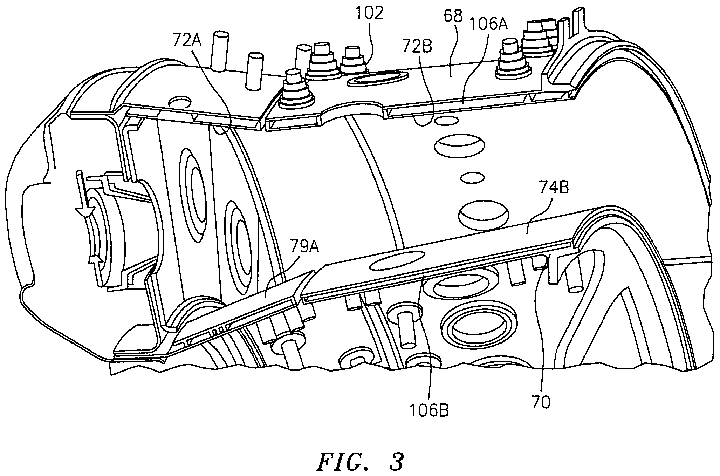

The combustor liner assemblies 60, 62 contain the combustion products for direction toward the turbine section 28. Each combustor liner assembly 60, 62 generally includes a respective support shell 68, 70 which supports one or more heat shields 72, 74 mounted to a hot side of the respective support shell 68, 70. Each of the heat shields 72, 74 may be generally rectilinear and manufactured of, for example, a nickel based super alloy, ceramic or other temperature resistant material and are arranged to form a liner array. In one disclosed non-limiting embodiment, the liner array includes a multiple of forward heat shields 72A and a multiple of aft heat shields 72B that are circumferentially staggered to line the hot side of the outer shell 68 (also shown in Figure 3). A multiple of forward heat shields 74A and a multiple of aft heat shields 74B are circumferentially staggered to line the hot side of the inner shell 70 (also shown in Figure 3).

The combustor 56 further includes a forward assembly 80 immediately downstream of the compressor section 24 to receive compressed airflow therefrom. The forward assembly 80 generally includes an annular hood 82, a bulkhead assembly 84, a multiple of fuel nozzles 86 (one shown) and a multiple of fuel nozzle guides 90 (one shown). Each of the fuel nozzle guides 90 is circumferentially aligned with one of the hood ports 94 to project through the bulkhead assembly 84. Each bulkhead assembly 84 includes a bulkhead support shell 96 secured to the combustor liner assemblies 60, 62, and a multiple of circumferentially distributed bulkhead heat shields 98 secured to the bulkhead support shell 96 around the central opening 92.

The annular hood 82 extends radially between, and is secured to, the forwardmost ends of the combustor liner assemblies 60, 62. The annular hood 82 includes a multiple of circumferentially distributed hood ports 94 that accommodate the respective fuel nozzle 86 and introduce air into the forward end of the combustion chamber 66 through a central opening 92. Each fuel nozzle 86 may be secured to the diffuser case module 64 and project through one of the hood ports 94 and through the central opening 92 within the respective fuel nozzle guide 90.

The forward assembly 80 introduces core combustion air into the forward section of the combustion chamber 66 while the remainder enters the outer annular plenum 76 and the inner annular plenum 78. The multiple of fuel nozzles 86 and adjacent structure generate a blended fuel-air mixture that supports stable combustion in the combustion chamber 66.

Opposite the forward assembly 80, the outer and inner support shells 68, 70 are mounted to a first row of Nozzle Guide Vanes (NGVs) 54A in the HPT 54. The NGVs 54A are static engine components which direct core airflow combustion gases onto the turbine blades of the first turbine rotor in the turbine section 28 to facilitate the conversion of pressure energy into kinetic energy. The core airflow combustion gases are also accelerated by the NGVs 54A because of their convergent shape and are typically given a "spin" or a "swirl" in the direction of turbine rotor rotation. The turbine rotor blades absorb this energy to drive the turbine rotor at high speed.

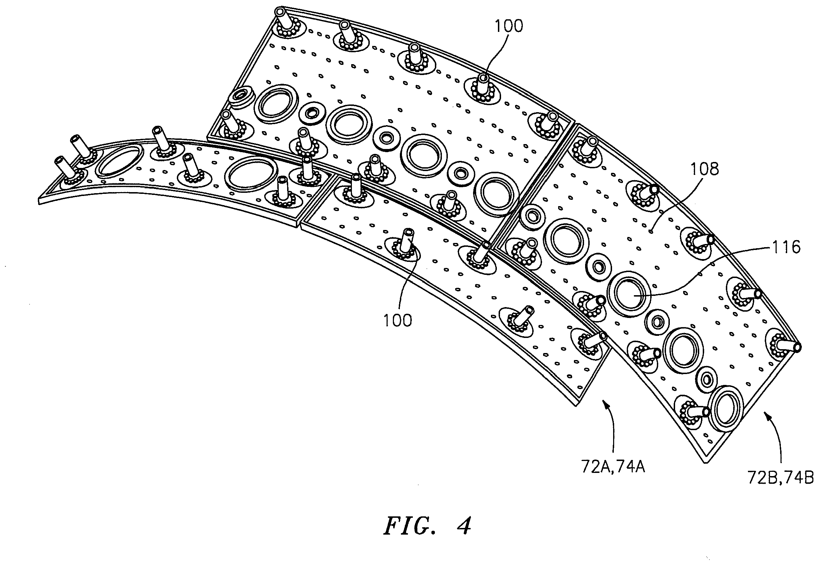

With reference to Figure 4, a multiple of studs 100 extend from the heat shields 72, 74 to mount the heat shields 72, 74 to the respective support shells 68, 70 with fasteners 102 such as nuts (also shown in Figure 3). That is, the studs 100 project rigidly from the heat shields 72, 74 and through the respective support shells 68, 70 to receive the fasteners 102 at a threaded distal end section thereof.

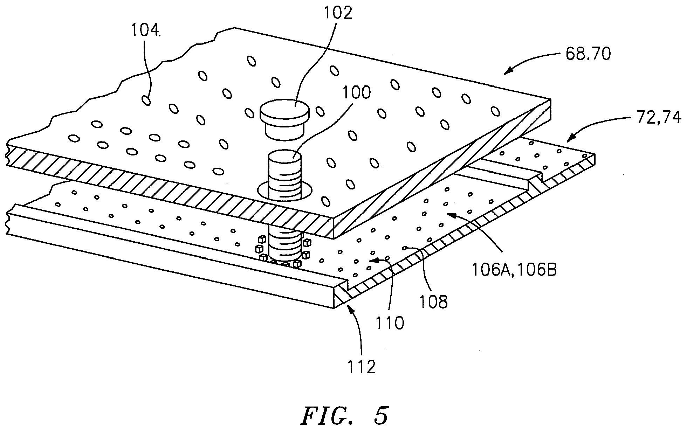

With reference to Figure 5, a multiple of cooling impingement holes 104 penetrate through the support shells 68, 70 to allow air from the respective annular plenums 76, 78 to enter cavities 106A, 106B (also shown in Figure 3) formed in the combustor liner assemblies 60, 62 between the respective support shells 68, 70 and heat shields 72, 74. The cooling impingement holes 104 are generally normal to the surface of the heat shields 72, 74. The air in the cavities 106A, 106B provides backside impingement cooling of the heat shields 72, 74 that is generally defined herein as heat removal via internal convection.

A multiple of cooling film holes 108 penetrate through each of the heat shields 72, 74. The geometry of the film holes, e.g, diameter, shape, density, surface angle, incidence angle, etc., as well as the location of the holes with respect to the high temperature main flow also contributes to effusion film cooling. The combination of impingement holes 104 and film holes 108 may be referred to as an Impingement Film Floatliner assembly.

The cooling film holes 108 allow the air to pass from the cavities 106A, 106B defined in part by a cold side 110 of the heat shields 72, 74 to a hot side 112 of the heat shields 72, 74 and thereby facilitate the formation of a film of cooling air along the hot side 112. The cooling film holes 108 are generally more numerous than the impingement holes 104 to promote the development of a film cooling along the hot side 112 to sheath the heat shields 72, 74. Film cooling as defined herein is the introduction of a relatively cooler airflow at one or more discrete locations along a surface exposed to a high temperature environment to protect that surface in the immediate region of the airflow injection as well as downstream thereof.

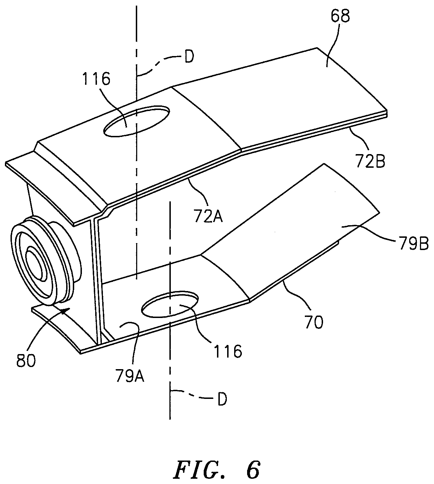

A multiple of dilution holes 116 penetrate through both the respective support shells 68, 70 and heat shields 72, 74 along a common axis D (Figure 6). For example only, in a Rich-Quench-Lean (R-Q-L) type combustor, the dilution holes 116 are located downstream of the forward assembly 80 to quench the hot gases by supplying cooling air into the combustor. The hot combustion gases slow towards the dilution holes 116 and may form a stagnation point at the leading edge which becomes a heat source and may challenge the durability of the heat shields 72, 74 proximate this location. At the trailing edge of the dilution hole, due to interaction with dilution jet, hot gases form a standing vortex pair that may also challenge the durability of the heat shields 72, 74 proximate this location.

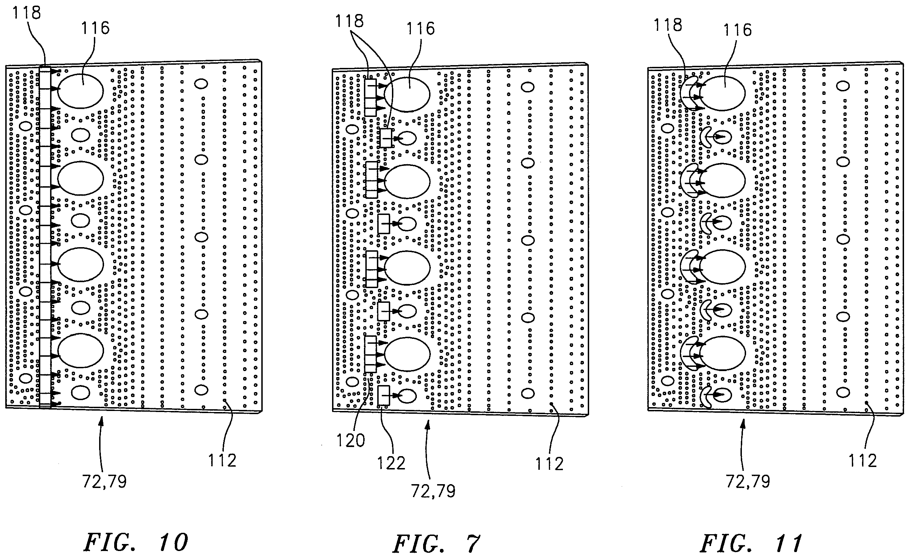

With reference to Figure 7 a raised feature 118 extends from the hot side 112 of each heat shield 72, 74 adjacent to a respective dilution hole 116. Various heights, widths and lengths of raised features 118 as well as displacements from the dilution hole 116 may be utilized. Furthermore, various distributions and combination of the raised features 118 may be utilized in either or both the circumferential or spanwise direction. Furthermore, the raised features 118 may be axially distributed in a first row 120 and a second row 122.

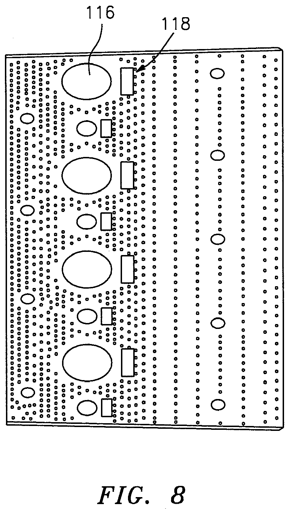

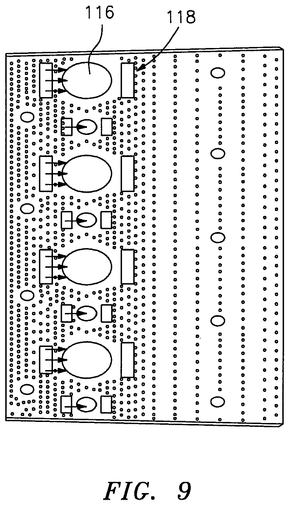

In one disclosed non-limiting embodiment, the raised feature 118 is located forward of the dilution hole 116. In another disclosed non-limiting embodiment, the raised feature 118 is located aft of the dilution hole 116 (Figure 8). In yet another disclosed non-limiting embodiment, the raised feature 118 is located both forward and aft of the dilution hole 116 (Figure 9).

The raised feature 118 may each be associated with single dilution hole 116 or may be continuous and adjacent to a multiple of dilution holes 118 (Figure 10).

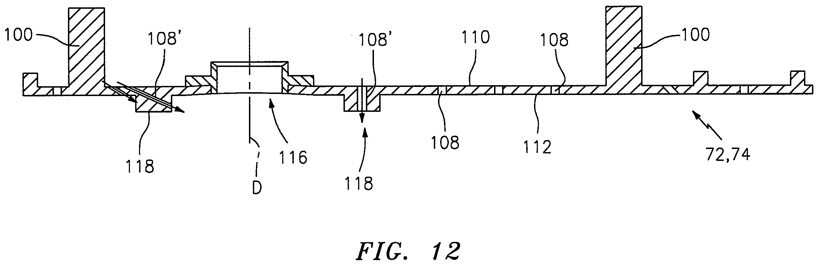

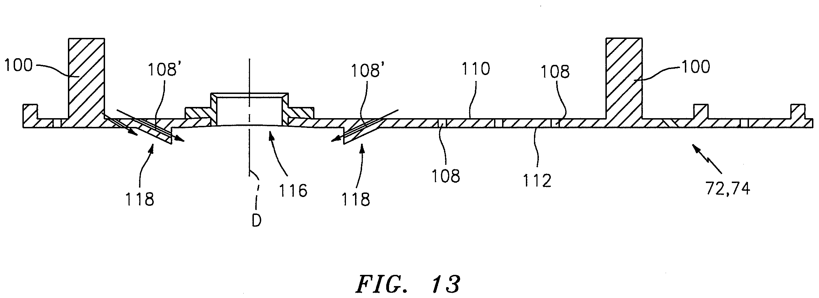

The raised feature 118 may be rectilinear, arcuate (Figure 11) or other shape. In addition, the raised feature may be rectilinear (Figure 12) or ramped (Figure 13) in cross-section.

With reference to Figure 13, each or particular raised features 118 may incorporate cooling film holes 108' to increase the film effectiveness if required by the specific design configuration as the aerodynamics phenomenon dictates. The cooling film holes 108' may also be oriented at an angle or normal to the hot side 112.

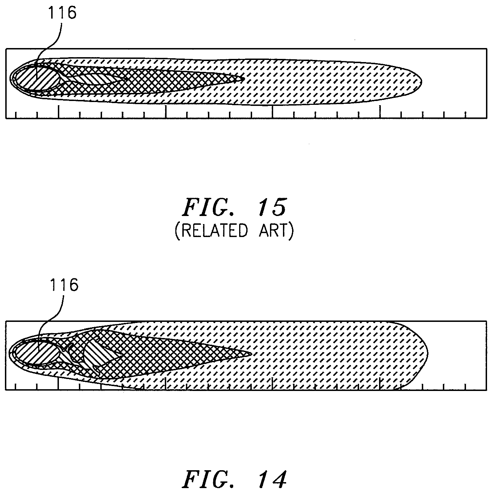

The raised feature 118 beneficially facilitates film cooling effectiveness adjacent to the dilution holes 116 by the minimization or prevention of hot gas stationary flow regions typically formed upstream and downstream of the dilution hole. The raised feature 118 essentially directs the upstream coolant air from cooling film holes 108 to spread in the spanwise direction adjacent to the dilution hole 116 to increase the film coverage (Figure 14). Downstream of the raised feature 118, coolant air may form a vortex pair to provide cooling further downstream. Also, the raised feature 118 may minimize or prevent cooling jet separation. A comparison of a section of a heat shield adjacent a dilution hole 116 with the raised feature 118 (Figure 15) and without a raised feature (Figure 15; RELATED ART) illustrates the increased film effectiveness and film cooling coverage.

It should be understood that relative positional terms such as "forward," "aft," "upper," "lower," "above," "below," and the like are with reference to the normal operational attitude of the vehicle and should not be considered otherwise limiting.

It should be understood that like reference numerals identify corresponding or similar elements throughout the several drawings. It should also be understood that although a particular component arrangement is disclosed in the illustrated embodiment, other arrangements will benefit herefrom.

Although particular step sequences are shown, described, and claimed, it should be understood that steps may be performed in any order, separated or combined unless otherwise indicated and will still benefit from the present disclosure.

The foregoing description is exemplary rather than defined by the limitations within. Various non-limiting embodiments are disclosed herein, however, one of ordinary skill in the art would recognize that various modifications and variations in light of the above teachings will fall within the scope of the appended claims. It is therefore to be understood that within the scope of the appended claims, the disclosure may be practiced other than as specifically described. For that reason the appended claims should be studied to determine true scope and content.

## Claims

1. A heat shield for use in a combustor of a gas turbine engine comprising:
a cold side (110); and
a hot side (112) with one or more raised features (118) that extend therefrom;
wherein said raised feature (118) is adjacent to a dilution hole (116) through said heat shield (72,74);
**characterised in that** said raised feature (118) includes a film cooling hole (108') therethrough.

2. The heat shield as recited in claim 1, further comprising a plurality of studs which extend from said cold side (110).

3. The heat shield as recited in claim 1 or 2, wherein said raised feature (118) is aft of said dilution hole.

4. The heat shield as recited in claim 1 or 2, wherein said raised feature (118) is forward of said dilution hole (116).

5. The heat shield as recited in any preceding claim, wherein said raised feature (118) comprises a ramp.

6. The heat shield as recited in any preceding claim, wherein said raised feature (118) is rectilinear.

7. The heat shield as recited in any of claims 1 to 5, wherein said raised feature (118) is arcuate.

8. A method of increasing heat transfer through a heat shield (72,74) of a combustor of a gas turbine engine, comprising:
augmenting cooling film airflow proximate a dilution hole (116) by locating a raised feature (118) proximate the dilution hole (116), **characterised in that** the raised feature (118) includes a film cooling hole (108') therethrough.

9. The method as recited in claim 8, further comprising:
directing film airflow through the raised feature (118) toward the dilution hole (116).

## Patentansprüche

1. Hitzeschild zur Verwendung in einer Brennkammer eines Gasturbinentriebwerks, umfassend:
eine kalte Seite (110); und
eine heiße Seite (112) mit einem oder mehreren erhabenen Merkmalen (118), die sich davon erstrecken;
wobei das erhabene Merkmal (118) an ein Verdünnungsloch (116) durch den Hitzeschild (72, 74) angrenzt;
**dadurch gekennzeichnet, dass** das erhabene Merkmal (118) ein Filmkühlloch (108') dadurch umfasst.

2. Hitzeschild nach Anspruch 1, ferner umfassend eine Vielzahl von Zapfen, die von der kalten Seite (110) aus verläuft.

3. Hitzeschild nach Anspruch 1 oder 2, wobei das erhabene Merkmal (118) hinter dem Verdünnungsloch liegt.

4. Hitzeschild nach Anspruch 1 oder 2, wobei das erhabene Merkmal (118) vor dem Verdünnungsloch (116) liegt.

5. Hitzeschild nach einem der vorstehenden Ansprüche, wobei das erhabene Merkmal (118) eine Abschrägung umfasst.

6. Hitzeschild nach einem der vorstehenden Ansprüche, wobei das erhabene Merkmal (118) geradlinig ist.

7. Hitzeschild nach einem der Ansprüche 1 bis 5, wobei das erhabene Merkmal (118) gebogen ist.

8. Verfahren zum Erhöhen der Wärmeübertragung durch einen Hitzeschild (72, 74) einer Brennkammer eines Gasturbinentriebwerks, umfassend:
Vergrößern des Kühlfilmluftstroms nahe einem Verdünnungsloch (116) durch Anordnen eines erhabenen Merkmals (118) nahe dem Verdünnungsloch (116), **dadurch gekennzeichnet, dass** das erhabene Merkmal (118) ein Filmkühlloch (108') dadurch umfasst.

9. Verfahren nach Anspruch 8, ferner umfassend:
Lenken des Filmluftstroms durch das erhabene Merkmal (118) in Richtung auf das Verdünnungsloch (116).

## Revendications

1. Bouclier thermique destiné à être utilisé dans une chambre de combustion d'un moteur à turbine à gaz comprenant :
un côté froid (110) ; et
un côté chaud (112) avec un ou plusieurs éléments surélevés (118) qui s'étendent depuis celui-ci ;
dans lequel ledit élément surélevé (118) est adjacent à un trou de dilution (116) à travers ledit bouclier thermique (72, 74) ;
**caractérisé en ce que** ledit élément surélevé (118) comporte un trou de refroidissement pelliculaire (108') au travers.

2. Bouclier thermique selon la revendication 1, comprenant en outre une pluralité de tenons qui s'étendent depuis ledit côté froid (110).

3. Bouclier thermique selon la revendication 1 ou 2, dans lequel ledit élément surélevé (118) est à l'arrière dudit trou de dilution.

4. Bouclier thermique selon la revendication 1 ou 2, dans lequel ledit élément surélevé (118) est à l'avant dudit trou de dilution (116).

5. Bouclier thermique selon une quelconque revendication précédente, dans lequel ledit élément surélevé (118) comprend une rampe.

6. Bouclier thermique selon une quelconque revendication précédente, dans lequel ledit élément surélevé (118) est rectiligne.

7. Bouclier thermique selon l'une quelconque des revendications 1 à 5, dans lequel ledit élément surélevé (118) est arqué.

8. Procédé d'augmentation de transfert thermique à travers un bouclier thermique (72, 74) d'une chambre de combustion d'un moteur à turbine à gaz, comprenant :
l'augmentation d'un flux d'air pelliculaire de refroidissement à proximité d'un trou de dilution (116) en localisant un élément surélevé (118) à proximité du trou de dilution (116), **caractérisé en ce que** l'élément surélevé (118) comporte un trou de refroidissement pelliculaire (108') au travers.

9. Procédé selon la revendication 8, comprenant en outre :
le fait d'orienter un flux d'air pelliculaire à travers l'élément surélevé (118) vers le trou de dilution (116).
